**Europäisches Patentamt**

**European Patent Office**

**Office européen des brevets**

(19)

(11) Veröffentlichungsnummer: **0 143 117**
A1

(12) # EUROPÄISCHE PATENTANMELDUNG

(21) Anmeldenummer: 83111949.0

(22) Anmeldetag: 29.11.83

(51) Int. Cl.⁴: **A 47 J 31/54,** H 05 B 3/50,
B 23 K 20/22

(43) Veröffentlichungstag der Anmeldung: 05.06.85
Patentblatt 85/23

(84) Benannte Vertragsstaaten: **AT BE CH DE FR GB IT LI LU NL SE**

(71) Anmelder: **König, Harry, Gärtnerweg 8,
D-6472 Altenstadt 2 (DE)**

(72) Erfinder: **König, Harry, Gärtnerweg 8,
D-6472 Altenstadt 2 (DE)**

(74) Vertreter: **Munderich, Paul, Dipl.-Ing., Frankfurter
Strasse 84, D-6466 Gründau-Rothenbergen (DE)**

(54) **Durchlauferhitzer für die Kaffee- oder Teebereitung.**

(57) Die Erfindung betrifft ein Verfahren zur Herstellung einer dauerhaften Verbindung mehrerer Teile, fallweise aus verschiedenen metallischen Werkstoffen bestehend, durch Zufuhr von Wärme oder aber mit Druck, insbesondere für elektrisch beheizbare Durchlauferhitzer für die Kaffee- oder Teebereitung.

Die zu verbindenden Einzelteile werden nach dem Stand der Technik durch Schweißen, Löten oder Pressen hergestellt, wobei zusammengefaßt festzuhalten ist, daß keiner dieser Verbindungsverfahren für die Verbindung von unterschiedlichen metallischen Werkstoffen oder durch Druck ohne gleichzeitige Zuführung eines Lotes eine Teileverbindung zuläßt.

Es ist deshalb Ziel, ein Verfahren zur Herstellung dauerhafter Verbindungen zu nennen, das die Verbindung verschiedener metallischer Werkstoffe ohne Lotzusatz ermöglicht.

Erfindungsgemäß ist vorgesehen, daß die Verbindung der Teile durch kurzzeitige Zufuhr von Wärme in Verbindung mit Druck ein zumindest quasi-fließendes Ineinanderdringen der Werkstoffe, verbunden mit einer Vergrößerung der zueinander gerichteten Oberflächen, in den vorgesehenen Bereichen stattfindet.

Die Anwendung des Verfahrens für Durchlauferhitzer 1 sieht u.a. die Anlage der Buckel 5 des Rohrheizkörpers 2 an der Warmhalteplatte 4 vor, wobei sich bei der anschließenden Wärme- Druckverbindung die Buckel 5 in beiden Teilen etwa gleichmäßig verdrängen.

Die Erfindung betrifft ein Verfahren zur Herstellung
einer dauerhaften Verbindung mehrerer Teile, fallweise aus verschiedenen metallischen Werkstoffen, durch Zufuhr von Wärme
oder aber mit Druck, insbesondere für die Herstellung
elektrisch beheizbarer Durchlauferhitzer für die Kaffee-
oder Teebereitung, in der Regel bestehend aus einem
ein- oder mehrteiligen Rohrheizkörper, einem wärmeführend zu verbindenden ein- oder mehrteiligen Durchflußrohr, wobei der Rohrheizkörper und/oder das Durchflußrohr wärmeleitend mit einer Warmhalteplatte verbunden sind.

Durch die DE-OS 27 01 692 ist die Herstellung eines
elektrisch beheizbaren Durchlauferhitzers für die
Kaffee- oder Teebereitung dieser Art bekannt geworden,
bei dem die wärmeleitenden Verbindungen der Teile untereinander durch Schweißen, Löten oder Pressen hergestellt werden.

Die Herstellung von Schweißverbindungen, bei denen
die Zufuhr von Wärme und ggf. auch die Anwendung von
Druck erforderlich ist, setzt die Gleichheit oder die
Artgleichheit der zu verbindenden Werkstoffe voraus,
so daß für die eingangs genannte fallweise Verbindung
verschiedener Werkstoffe das Schweißen grundsätzlich
nicht geeignet ist.
In diesem Zusammenhang wird auf Lueger, Lexikon der
Technik, rororo-Ausgabe, Band 22, Seite 1142 und 1143
hingewiesen.

2

Unter dem Begriff "Kaltpreßschweißen", der zwar in dieser Schrift nicht genannt wird, wird nach Lueger, Lexikon der Technik, rororo -Ausgabe, Band 1, Seite 227, die Verbindung gleichartiger oder ungleichartiger metallischer Werkstoffe bei Raumtemperatur ohne weitere Wärmezufuhr,allein durch Druck, verstanden.

Nachteilig ist, daß beim Kaltpreßschweißverfahren eine Verformung von 40 bis 86% der Ausgangsdicke notwendig ist, wobei der erforderliche Druck etwa gleich der Streckgrenze des aufzubringenden Werkstoffes ist.

Zur Herstellung einer Lötverbindung sind die zu verbindenden Teile auf eine Temperatur zu erhitzen, bei der sie zwar erstarrt bleiben aber das bindende Material, d.h. das Lot, geschmolzen wird.
Das Verfahren ist wesentlich abhängig von der Geschicklichkeit des Ausführenden, und es ist schwerfällig in der Anpassung an den jeweiligen Lötfall.
Es muß dabei im Hinblick auf die bei Durchlauferhitzer möglichen Temperaturen grundsätzlich von einem Hauptlötverfahren ausgegangen werden, wobei Lötungen durch induktives Erwärmen der Lötzone keine hinreichend exakte Einstellung der erforderlichen Temperaturen zuläßt.

Zusammengefaßt ist festzuhalten, daß keines der genannten Verfahren eine Verbindung von unterschiedlichen Werkstoffen durch Zufuhr von Temperatur oder durch Druck,

3

ohne gleichzeitige Zuführung eines Lotes zuläßt.

Diese Sachlage berücksichtigend ist es Aufgabe dieser Erfindung, ein Verfahren nach der eingangs beschriebenen Art zu nennen, das auf einfache Weise die Herstellung dauerhafter Verbindungen von verschiedenen Werkstoffen ohne Lotzusatz, bei geringem Leistungsaufwand, für die fallweise notwendige Erwärmung und Verformung ermöglicht, wobei sich die Verschiedenartigkeit auch lediglich auf unterschiedliche Legierungen beschränken kann.

Die erfindungsgemäße Lösung dieser Aufgabe sieht vor, daß die wärmeleitende Verbindung der Teile, unabhängig von ihrer unterschiedlichen Werkstoffauswahl durch kurzzeitige Zufuhr von Wärme in Verbindung mit Druck, bei durch Stoffunterschiede nicht möglicher Verschweißung, ein zumindest quasi-fließendes Ineinanderdringen der Werkstoffe, verbunden mit einer Vergrößerung der zueinander gerichteten Oberflächen der beiden jeweils aneinanderliegenden Teile in den vorgesehenen Bereichen stattfindet.

Durch die kurrzeitige Wärmezuführung in Verbindung mit Druck, die zumindest ein quasi-fließendes Ineinanderdringen der beiden zu verbindenden Werkstoffe, - d.h. ohne zwingend notwendige Einstellung des Schmelzzustandes beider Werkstoffe-, bei gleichzeitiger Vergrößerung von deren Kontaktoberfläche ermöglicht,wird eine sichere und gut wärmeleitende Verbihdung verschiedener metallischer Werkstoffe erreicht.

0143117

Bei diesen im wesentlichen über Flächen geringer
Größe sich erstreckenden Verbindungen müssen selbstverständlich die stoffspezifischen Eigenschaften
in Verbindung mit der bindenden Oberfläche bei Einstellung von Druck und Temperatur berücksichtigt
werden.

In diesem Zusammenhang kann vorgesehen werden,
daß die Verbindungstemperatur unterhalb der Grenze
der Schmelzverflüssigung der zu verbindenden Werkstoffe - in Verbindung mit dem in den Verbindungsstellen wirksamen Druck - der Verformungswiderstand
für das Ineinanderdringen der zu verbindenden Materialien insoweit herabsetzt, daß sich die Verbindung
vollzieht.

Eine Einstellung in diesen Grenzen ist für eine
große Zahl der Anwendungsfälle ein sicherer Weg,
die erforderlichen Verbindungen,ohne über die Verbindungsbereiche hinausgehende Verformungen der zu
verbindenden Teile in Kauf nehmen zu müssen, zu ermöglichen.

Für die Verbindung verschiedener, jedoch ein Eutektikum miteinander bildender Metalle, ist vorgesehen,
daß die Verbindungstemperatur knapp oberhalb der
eutektischen Temperatur eingestellt wird, so daß an
den Berührungsflächen zwischen den Teilen eine die
Bindung vollziehende Filmbildung stattfindet.

Im Rahmen der Einstellung von Druck und Temperatur über eine gewisse Zeitspanne ist vorgesehen, daß bei Erreichung eines vorbestimmten Anpreßdruckes zwischen den wärmeleitend zu verbindenden Teilen Kontakt für die Auslösung einer Kondensator-Impulserhitzung, bei vorbestimmter Kapazität des Kondensators, gegeben wird.

Zur Anwendung des Verfahrens für die Herstellung von Durchlauferhitzern wird vorgeschlagen, daß die Lagefixierung des Rohrheizkörpers und/oder des Durchflußrohres zur aufliegenden Warmhalteplatte durch mehrzahlig gleichzeitig erfolgende Verbindungen eingreifender Buckel, Ringbuckel oder Warzen in diesen gegenüberliegenden korrespondierenden Ausprägungen stattfindet.

Die genannte Anwendung ermöglicht nicht nur eine sichere Fixierung der zu verbindenden Teile zueinander, sondern sie ermöglicht darüberhinaus eine vorbestimmte Wärmeverteilung über die Warmhalteplatte.

Eine weitere Verbesserung ist darin zu sehen, daß die Buckel, die Ringbuckel oder Warzen sowie die korrespondierend hierzu vorgesehenen Einprägungen länglich ausgebildet sind, und sich jeweils über einen Wegabschnitt der Auflagenlänge der Teile zueinander erstrecken, wobei die Verbindung gleichzeitig über diese Wegstrecke stattfindet.

6

Abschließend ist festzuhalten, daß die vorgeschlagene erfindungsgemäße Lösung, insgesamt
betrachtet, den Forderungen der Aufgabenstellung
in vollem Umfang gerecht wird.

Eine weitere Verbindungsmöglichkeit ist dadurch gegeben,
daß die Buckel, die Ringbuckel oder Warzen, länglich
ausgebildet sind und auf einer zur Wärmeplatte gerichteten, abgeflachten Seite des Rohrheizkörpers
und/oder des Durchflußrohres durch Ausprägung hervorragen und der Wärmeplatte ohne zusätzliche Lagefixierung anliegen.

Die notwendige Lagefixierung der miteinander zu
verbindenden Teile muß hierbei durch entsprechende
Ausbildung des Werkzeuges gewährleistet werden.

Die Anwendung des erfindungsgemäßen Verfahrens
wird durch die beigefügte Zeichnung näher erläutert.

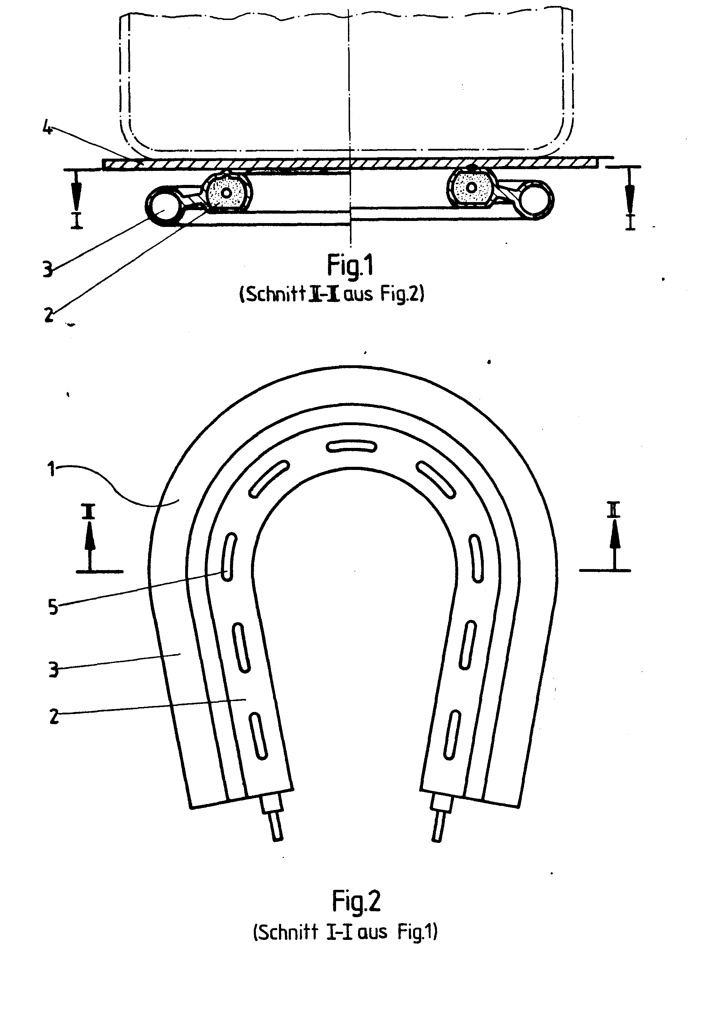

Figur 1 zeigt    im Aufriß einen durch die Warmhalteplatte ergänzten Schnitt II-II
durch Figur 2, wobei links die
vollzogene Verbindung des Rohrheizkörpers mit der Warmhalteplatte
und rechts lediglich dessen Anlage
an die Warmhalteplatte dargestellt
ist.

Figur 2 zeigt    eine entlang der Verbindungsstelle zwischen Warmhalteplatte
und Rohrheizkörper geführten
Schnitt I/I.

Der Durchlauferhitzer 1 besteht aus einem etwa hufeisenförmig gebogenen Rohrheizkörper 2, dem sich abstandsgleich und durch einen Steg wärmeleitend und
tragend verbunden das Durchflußrohr 3 in einer achsparallelen Versetzung zum Heizkörper 2 anschließt.

Der Warmhalteplatte 4 liegt ein abgeflachter, mit
ausgeprägten Buckeln 5 versehener Rohrheizkörper 2
auf, wobei fallweise vorgesehen werden kann, daß in
der Warmhalteplatte 4, korrespondierend zu den Buckeln 5,
geformte Einprägungen vorgesehen sind.

0143117

8

Die Verbindung der zusammengefügten Teile 3 und 5 erfolgt durch das bereits beschriebene Kondensator-Impulserhitzungsverfahren bei vorbestimmtem Anpreßdruck und vorbestimmter Kapazität des Kondensators.

Patentansprüche

1. Verfahren zur Herstellung einer dauerhaften Verbindung mehrerer Teile, fallweise aus verschiedenen metallischen Werkstoffen, durch Zufuhr von Wärme oder aber mit Druck, insbesondere für die Herstellung elektrisch beheizbarer Durchlauferhitzer für die Kaffee- oder Teebereitung, in der Regel bestehend aus einem ein- oder mehrteiligen Rohrheizkörper, einem wärmeführend zu verbindenden ein- oder mehrteiligen Durchflußrohr, wobei der Rohrheizkörper und/oder das Durchflußrohr wärmeleitend mit einer Warmhalteplatte verbunden sind, dadurch gekennzeichnet,

d a ß die wärmeleitende Verbindung der Teile, unabhängig von ihrer unterschiedlichen Werkstoffauswahl, durch kurzzeitige Zufuhr von Wärme in Verbindung mit Druck, bei durch Stoffunterschiede nicht möglicher Verschweißung, ein zumindest quasifließendes Ineinanderdringen der Werkstoffe, verbunden mit einer Vergrößerung der zueinander gerichteten Oberflächen der beiden jeweils aneinanderliegenden Teile in den vorgesehenen Bereichen stattfindet.

2. Verfahren nach Anspruch 1, dadurch gekennzeichnet, d a ß die Verbindungstemperatur unterhalb der Grenze der Schmelzverflüssigung der zu verbindenden Werkstoffe - in Verbindung mit dem in den Verbindungsstellen wirksamen Druck - der Verformungswiderstand für das Ineinanderdringen der zu verbindenden Materialien insoweit herabsetzt, daß sich die Verbindung vollzieht.

3. Verfahren nach Anspruch 1, dadurch gekennzeichnet,

d a ß zur Bindung verschiedener, jedoch ein Eutektikum miteinander bildender Metalle, die Verbindungstemperatur knapp oberhalb der eutektischen Temperatur liegend eingestellt und hierbei an den Berührungsflächen zwischen den Teilen eine die Bindung vollziehende Filmbildung stattfindet.

4. Verfahren nach Anspruch 1 bis 3, dadurch gekennzeichnet,

d a ß bei Erreichung eines vorbestimmten Anpreßdruckes zwischen den wärmeleitend zu verbindenden Teilen Kontakt für die Auslösung einer Kondensator-Impulserhitzung, bei vorbestimmter Kapazität des Kondensators,gegeben wird.

5. Anwendung des Verfahrens zur Herstellung von Durchlauferhitzern nach Anspruch 1 und 2, 4 oder 1, 3 und 4, dadurch gekennzeichnet,

d a ß die Lagefixierung des Rohrheizkörpers (2) und/oder des Durchflußrohres (3) zur aufliegenden Warmhalteplatte (4) durch mehrzahlig, gleichzeitig erfolgende Verbindungen angreifender Buckel (5), Ringbuckel oder Warzen in diesen gegenüberliegenden korrespondierenden Einprägungen stattfindet.

6. Anwendung des Verfarens zur Herstellung von Durchlauferhitzern nach Anspruch 1 bis 5, dadurch gekennzeichnet,

d a ß die Buckel (5), die Ringbuckel oder Warzen sowie die korrespondierend hierzu vorgesehenen Einprägungen länglich ausgebildet sind und sich jeweils über einen Wegabschnitt der Auflagenlänge der Teile zueinander erstrecken, wobei die Verbindung gleichzeitig über diese Wegstrecken stattfindet.

7. Anwendung des Verfahrens nach Anspruch 1 bis 5, dadurch gekennzeichnet,

d a ß die Buckel (5), die Ringbuckel oder Warzen, länglich ausgebildet sind und auf einer zur Warmhalteplatte (4) gerichteten, abgeflachten Seite des Rohrheizkörpers (2) und/oder des Durchflußrohres (3) durch Ausprägung hervorragen und der Warmhalteplatte (4) ohne zusätzliche Lagefixierung anliegen.

0143117

**Fig.1**
(Schnitt II-II aus Fig.2)

**Fig.2**
(Schnitt I-I aus Fig.1)

**Europäisches Patentamt**

**EUROPÄISCHER RECHERCHENBERICHT**

0143117

Nummer der Anmeldung

EP 83 11 1949

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 908 073 (DULIN)<br>* Insgesamt * | 1-3 | A 47 J 31/54<br>H 05 B 3/50<br>B 23 K 20/22 |
| | --- | | |
| A | DE-A-2 555 599 (ELPAG AG)<br>* Insgesamt * | 1,5 | |
| | --- | | |
| A | GB-A-1 590 836 (ASSOCIATED ENGINEERING)<br>* Insgesamt * | 1,3 | |
| | ----- | | |

RECHERCHIERTE SACHGEBIETE (Int. Cl. ³)

A 47 J
H 05 B

Der vorliegende Recherchenbericht wurde für alle Patentansprüche erstellt.

| Recherchenort<br>DEN HAAG | Abschlußdatum der Recherche<br>03-08-1984 | Prüfer<br>SCHARTZ J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03. 82